# EUROPEAN PATENT SPECIFICATION

(11) **EP 4 059 094 B1**
(45) Date of publication and mention of the grant of the patent: **21.01.2026**
(21) Application number: 20811759.8
(22) Date of filing: 03.11.2020
(51) Int. Cl.: H01R 11/12, H02G 15/04, H01R 4/34, H01R 13/52, H01R 4/70, H02G 15/06

(54) **ASSEMBLY WITH CAP CO-MOLDED ON A METALLIC TERMINAL FOR THE PROTECTION OF AN ELECTRIC JOINT FROM LIQUID INFLITRATION**
ANORDNUNG MIT AN EINER METALLISCHEN ANSCHLUSSKLEMME ANGEGOSSENEM DECKEL ZUM SCHUTZ EINES ELEKTRISCHEN GELENKES GEGEN FLÜSSIGKEITSINFILTRIERUNG
ENSEMBLE AVEC CAPUCHON CO-MOULÉ SUR UNE BORNE MÉTALLIQUE POUR LA PROTECTION D'UN JOINT ÉLECTRIQUE CONTRE UNE FUITE DE LIQUIDE

(30) Priority: 15.11.2019 IT 201900021195
(43) Date of publication of application: 21.09.2022
(73) Proprietor: Abazia S.p.A., 15023 Felizzano (IT)
(72) Inventor: BOTTAZZI, Attilio, Felizzano (IT)
(74) Representative: Garavelli, Paolo
(86) International application number: PCT/IT2020/050261
(87) International publication number: WO 2021/095068

(56) References cited:
- CN-U- 202 167 732
- CN-Y- 201 069 796
- JP-A- H11 167 911
- US-A1- 2016 294 107

## Description

The present invention refers to an assembly with a cap, co-molded on an eyelet metallic terminal, for the protection against infiltration of liquids in a connection of electric cables with a branch node.

This solution was specially developed for the electric cables of hybrid vehicles.

The electrical cables that connect to the batteries of a hybrid vehicle typically have a section of 50 mm², having to conduct very intense currents. These electric cables, fitted with caps, must be able to be placed under the car floor mat. For this reason, the overall dimensions must be limited as much as possible in height.

This terminal is connected to a junction node, placed under the floor of the car itself. The node has its own structure and is equipped with its own sealing gaskets. From the upper part of the floor, in correspondence with said junction node, both part of the plastic body that constitutes the structure of the node itself, and a threaded pin that allows the locking of the eyelet terminal, incorporated in the cap itself, by means of a self-locking nut.

Purpose of the cap is electrically isolating the junction and preventing any liquid from entering the junction, to avoid short circuits and/or oxidation.

The co-molded cap is so defined because the end of the cable, equipped with said metal eyelet terminal crimped to the cable itself, is inserted into the mold of an injection molding machine and coated with a thermoplastic rubber which forms the cap itself.

Therefore the cap in question is an element, made of thermoplastic rubber that completely wraps the end of the cable, leaving the eyelet of the terminal free so that said threaded pin can be inserted in said eyelet which allows the terminal itself to be fixed by means of a self-locking nut. The upper part of the cap, which is open to allow the insertion of the self-locking nut and the key with which to tighten, is subsequently closed by inserting a cap, said cap being obtained from the cap itself upon injection molding.

Once said cable is mounted on the threaded pin, the possible critical points from which water can enter are the following:
- sheet side area, i.e. the lower part of the cap that comes into contact with the floor sheet, where infiltrations between the cap and the sheet itself could occur;
- closing cap area on the self-locking nut, where infiltrations could occur between the outer edges of the cap itself and the seat where it is inserted;
- cable side area, in which infiltrations could occur between the cable itself and the co-molded cap, said criticality being due to the fact that the material of the cap is not compatible with the material of the insulation with which the cable is coated, so it does not occur the welding between the two materials in contact.

As for the area on the sheet metal side, it should be emphasized that the sheet metal of a car floor has a thickness of only 0.8 mm, so it can undergo slight deformations when the terminal is locked to the junction node located under the car floor and this fact obviously introduces a new criticality with regard to sealing.

US-A1-2016/294107, JP-A-H11 167911, CN-U-202 167 732 e CN-Y-201 069 796 disclose caps according to the preamble of Claim 1.

Object of the present invention is solving the above prior art problems by providing means suitable for protecting a connection of electric cables from infiltration of liquids.

The above and other objects and advantages of the invention, which will appear from the following description, are achieved with an assembly in accordance with claim 1.

Said assembly comprises a cap co-molded on a metal terminal connected to a conducting metal element by tightening a nut which is screwed onto a threaded pin integral with said conducting metal element, in which said conducting metal element is part of a junction node located on one side of a sheet metal while said metal terminal is positioned on the opposite side of said sheet, and is characterized in that it is made of thermoplastic rubber and comprises:
- a main body which has a central through hole, through which said threaded pin is inserted on which said nut is screwed, said main body coming into contact with said sheet, first means being provided for ensuring the seal against liquids between said body main and said sheet;
- a cap, connected by means of a flexible strap to said main body of the cap, said cap being able to fit into a circular seat obtained on the upper part of the main body of the cap, second means being provided for ensuring the seal against liquids between said body principal and called little cap;
- a sleeve that covers the end of said cable, third means being provided to ensure liquid tightness between said main body and said electrical cable.

Preferred embodiments and non-trivial variants of the present invention form the subject of the dependent claims.

It is understood that all the attached claims form an integral part of the present description.

It will be immediately obvious that innumerable variations and modifications (for example relating to shape, dimensions, arrangements and parts with equivalent functionality) can be made to what has been described without departing from the scope of the invention as appears from the attached claims.

The present invention will be better described by some preferred embodiments, provided by way of non-limiting example, with reference to the attached drawings, in which:
- FIG. 1 (a, b) show an embodiment example of the terminal according to the present invention;
- FIG. 2 shows the assembly of the terminal according to the invention;
- FIG. 3 shows the way in which the seal is carried out with the floor of the car;
- FIG. 4 shows the way in which the sealing is effected in the upper part of the cap.

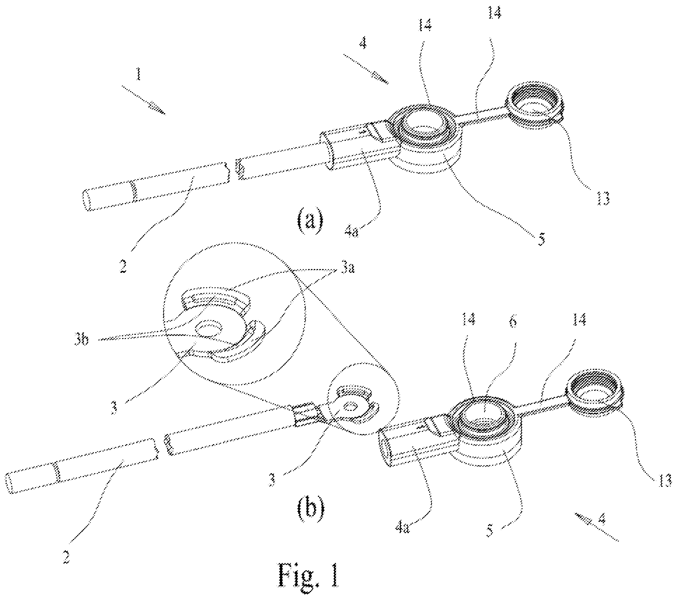

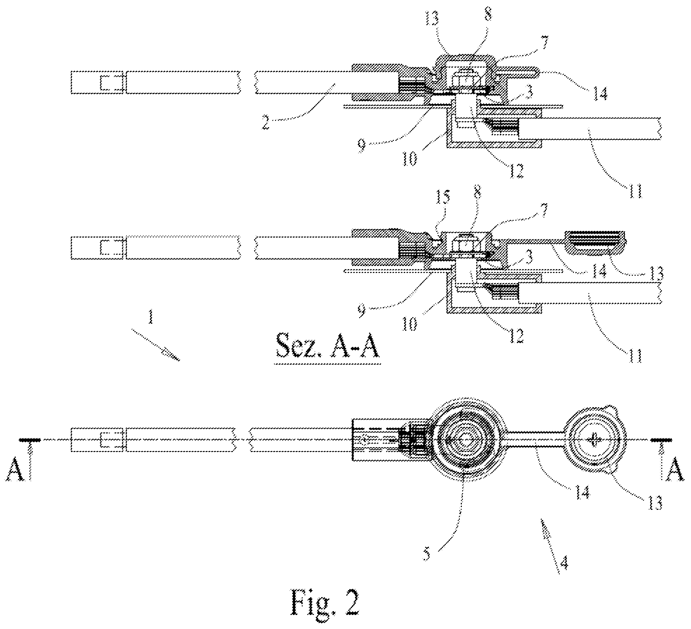

Referring to FIGS. 1 and 2, (1) designates a terminal of an electric cable (2). Said terminal (1) includes a metal eyelet (3) and is covered with a co-molded cap (4), according to the invention.

Said eyelet (3) is crimped on the end of the electric cable (2), having removed the covering of the cable (2) itself, in order to allow the metal contact.

In particular, FIG. 1a shows the electric cable (2), metal terminal with eyelet (3) and cap (4), as it is extracted from the injection molding machine, while in FIG. 1b said electric cable (2), equipped with said metal terminal with eyelet (3), and said cap (4) are shown separately.

According to a preferred embodiment, the eyelet terminal (3) is provided with one or more "ears" (3a), for example two, in turn preferably provided with slots (3b) for better incorporation into the cap (4) same.

The cap (4) comprises, in turn, a main body (5), of circular shape, which has a central hole (6) through and coaxial, through which a threaded pin (7) is inserted which allows fixing, by means of a self-locking nut (8), of the eyelet terminal (3), ensuring the metal contact. On the side of the cable (2) there is a sleeve (4a) that covers the end of the cable (2) itself.

Under the sheet metal (9) of the car floor there is a junction node (10), in which converge one or more electric cables (11) electrically connected to a metal element (12) which has the function of ensuring contact electric cable between said one or more electric cables (11) and said electric cable (2). Said junction node (10) is made of insulating material and is equipped with gaskets (not shown) designed to prevent infiltration of liquids inside the node (10) itself.

The upper part of the node (10) partially inserts into a hole in the sheet metal (9) of the floor, leaving said metal element (12) in a slightly raised position from which said threaded pin (7) protrudes. By inserting the pin (7) in the hole of the eyelet terminal (3) and tightening the self-locking nut (8), an efficient electrical connection is obtained between the electric cable (2) and said metal element (12).

While the flat part of the eyelet terminal (3) comes into contact with said conducting metal element (12), the ears (3a) of the eyelet terminal (3), which are embedded in the thermoplastic rubber which constitutes the cap (4), have the function of distributing the compression force, due to the tightening of the nut (8), thus strongly compressing the main body (5) of the cap (4) against the sheet metal (9) which constitutes the floor of the sealing, according to a mechanism that will be specified below. Said conducting metallic element (12) is adequately isolated from the sheet metal (9) of the floor by the insulating material structure of the node (10).

A cap (13) is connected to the main body (5) of the cap (4), by means of a flexible lace (14), said cap (13) being able to fit into a circular seat (15) obtained on the upper part of the main body (5) of the cap (4). Said insertion of the cap (13) on the circular seat (15) takes place by bending the flexible lace (14).

The sheet metal (9) of the car floor normally has a thickness of only 0.8 mm so that, by tightening the self-locking nut (8), you risk deforming the sheet itself. To avoid this drawback, the lower part of the main body (5) of the cap (4) is shaped in such a way as to take the form of a suction cup, adapting to the plane of the sheet (9) and exerting adequate pressure in the contact area between main body (5) of the cap (4) and sheet metal (9) of the floor, in order to ensure watertightness

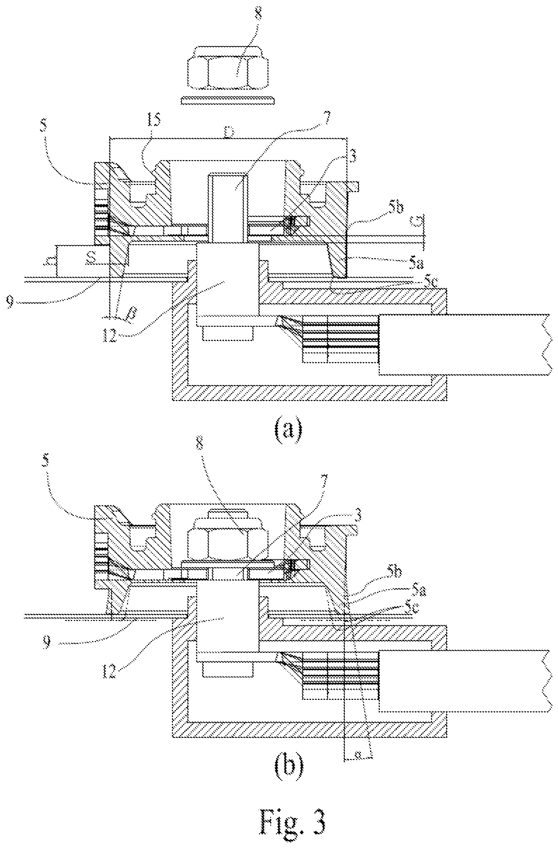

In FIGS. 3 (a, b) shows the way in which the cap (4) carries out the water tightness in the first of the areas of possible infiltration of liquids, i.e. between the lower edge (5a) of the main body (5) and the sheet (9) of the floor.

In particular, in FIG. 3a shows the main body (5) of the cap (4) with the pin (7) inserted in the eyelet (3), but with the nut (8) not yet tightened, while in FIG. 3b shows the same main body (5) after tightening the nut (8).

As can be seen from FIG. 3a, when the lower circular edge (5a) of the main body (5) is in contact with the plate (9), but the nut (8) has not yet been tightened, there is a gap (G) between the lower surface of the ring terminal (3) and the upper surface of the conducting metal element (12), for example 2 ÷ 3 mm. When the self-locking nut (8) is tightened, the lower surface of the ring terminal (3) and the upper surface of the conducting metal element (12) come into contact. Said contact is made possible by a controlled deformation of said lower circular edge (5a) of the main body (5). Said deformation consists in a shortening of the edge (5a) itself and a rotation of this towards the outside by an angle (α) between 8° and 12°.

An important role is also played by a rounding (5c), with a radius of curvature between 0.5 mm and 1.5 mm of the internal edge of the edge (5a) which favors a unique sliding towards the outside of the edge (5a) itself.

Finally, an important role is played by the ears (3a, 3b) of the eyelet terminal (3), as said ears (3a, 3b) allow the compression exerted by the nut (8) to approach the peripheral parts of the main body (5), avoiding the risk of shearing the central area of the main body (5) itself.

In FIG. 3b the upper edge of the sheet metal (9) of the floor and the profile of the edge (5a) are shown with dashed lines in the position they had before tightening the self-locking nut (8).

In order for the material that makes up the cap (4) to stretch out at its best in this phase, the inside of the main body (5) of the cap (4) must be discharged as much as possible, so that the edge (5a) has the necessary elasticity. In practice, for the edge (5a) of the main body (5) to behave like a suction cup, it must have the following characteristics:
- a thickness (S) comprised between 5% and 15% of the diameter (D) of the main body (5) of the cap (4);
- a height (h) comprised between 10% and 30% of the diameter (D) of the main body (5) of the cap (4);
- an inclination (β) of the internal surface between 7° and 13°.

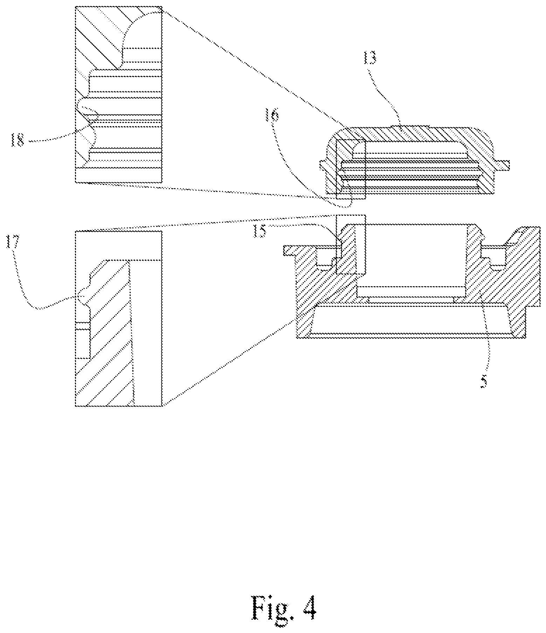

FIG. 4 shows the cap (13) which fits into said circular seat (15), obtained on the upper part of the main body (5) of the cap (4).

Inside the cap (13) a profile has been obtained that is suitable for coupling with the profile of said seat (15), in order to create an effective seal.

These profiles are characterized by the presence of shapes similar to one or more O-rings (17) that couple with corresponding seats (18) with an interference between 0.1 mm and 0.3 mm.

Finally, in the third critical area, i.e. the area on the cable side (2), where infiltrations between the cable (2) itself and the co-molded cap (4) could occur, the criticality is due to the fact that the material of the cap ( 4) is not compatible with the material of the insulation with which the cable (2) is coated, so that no welding takes place between the two materials in contact. The problem is solved with a suitable increase in the overlap length between said sleeve (4a) and the cable (2) itself. Experimentation has shown that an efficient infiltration seal is obtained with an overlap length between 2 and 3 times the external diameter of the cable (2).

The cap (4) must have the following characteristics:
- withstand a high temperature of about 150 ° C continuously;
- maintain good flexibility down to -40 ° C;
- have good resistance to abrasions and chemicals;
- have a good mechanical resistance unaltered over time;
- have a good dielectric strength;
- resist tearing and tearing;
- reduce the vibrations in the over-molded pieces;
- be self-extinguishing.

A suitable material for making the insulating cap (4) is a TPU thermoplastic polyurethane elastomer, called Elastollan, which is burned in red RAL 3000 and is manufactured by BASF.

## Claims

1. Assembly consisting of a cap (4), a cable (2), and a metal terminal (3) of the eyelet type wherein the cap (4) is co-molded on the metal terminal (3) and the cable (2), for the protection against infiltration of liquids of a connection of electric cables (11) connectable to said metal terminal (3), said connection being made with a conducting metal element (12) by tightening a nut (8) which is screwed onto a threaded pin (7) integral with said conducting metal element (12), in which said conducting metal element (12) is part of a branch (10) placed on one side of a sheet (9) and said metal terminal (3) is positioned on the opposite side of said sheet (9), said cap (4) being made of thermoplastic rubber and comprising:
- a main body (5) which has a central through-hole (6) through which said threaded pin (7) is insertable on which said nut (8) is screwed, said main body (5) able to come into contact with said sheet (9), first means being provided for ensuring liquid tightness between said main body (5) and said sheet (9);
- a little cap (13), connected by a flexible lace (14) to said main body (5) of the cap (4), said little cap (13) being able to fit into a circular seat (15) obtained on the upper part of the body main body (5) of the cap (4), second means being provided for ensuring liquid tightness between said main body (5) and said little cap (13);
- a sleeve (4a) that covers the end of said cable (2), third means being provided to ensure the tightness of liquids between said main body (5) and said electric cable (2),
**characterized in that** said eyelet being crimped on the end of the electric cable (2), having removed the covering of the cable itself, in order to allow the metal contact,
said metal terminal (3) comprises one or more ears (3a, 3b) embedded in the thermoplastic rubber which constitutes said cap (4), said ears (3a, 3b) having the function of distributing the effort compression, due to the tightening of said nut (8), wherein said ears (3a) are provided with slits (3b) designed to improve the incorporation of said eyelet terminal (3) in the cap (4).

2. Assembly with cap (4) according to claim 1, **characterized in that** said flexible lace (14) is designed to be bent in order to allow the insertion of the cap (13) on the circular seat (15).

3. Assembly with cap (4) according to claim 1 or 2, **characterized in that** said first means, suitable for ensuring liquid tightness between said main body (5) and said sheet (9), comprise an edge (5a) of said main body (5) having the following characteristics:
- a thickness (S) comprised between 5% and 15% of the diameter (D) of the main body (5) of the cap (4);
- a height (h) comprised between 10% and 30% of the diameter (D) of the main body (5) of the cap (4);
- an inclination (β) of the internal surface between 7° and 13°;
in such a way that said edge (5a) of the main body (5) of the cap (4), under the effect of the compression exerted by the tightening of said nut (8) on the threaded pin (7), deforms in such a way as to effect the sealing acting like a suction cup.

4. Assembly with cap (4) according to claim 3, **characterized in that** it provides a rounding (5c), with a radius of curvature of between 0.5 mm and 1.5 mm of the internal corner of said edge (5a), said rounding favoring a univocal sliding towards the outside of the edge (5a) itself.

5. Assembly with cap (4) according to at least one of claims 1 to 4, **characterized in that** said second means, suitable for ensuring liquid tightness between said main body (5) and said cap (13), comprise a profile, obtained inside the cap (13), able to couple with a profile of said seat (15), said profiles being **characterized by** the presence of shapes similar to one or more O-rings (17) which couple with corresponding seats (18) with an interference between 0.1 mm and 0.3 mm.

6. Assembly with cap (4) according to at least one of claims 1 to 5, **characterized in that** said third means, suitable for ensuring liquid tightness between said main body (5) and said electric cable (2), comprise an overlap length between said sleeve (4a) and said electric cable (2) comprised between 2 and 3 times the external diameter of the cable (2).

7. Assembly with cap (4) according to claims 1 to 6, **characterized in that** said thermoplastic rubber is a TPU thermoplastic polyurethane elastomer.

## Patentansprüche

1. Gruppe bestehend aus einer Kappe (4) , einem Kabel (2) und einem Metallanschluss (3) vom Ösentyp, wobei die Kappe (4) auf dem Metallanschluss (3) und auf dem Kabel (2) gemeinsam geformt ist, zum Schutz vor dem Eindringen von Flüssigkeit einer Verbindung von elektrischen Kabeln (11), die mit dem Metallanschluss (3) verbindbar sind, wobei die Verbindung mit einem leitfähigen Metallelement (12) durch Anziehen einer Mutter (8) hergestellt wird, die auf einen Gewindestift (7) geschraubt wird, der mit dem leitfähigen Metallelement (12) fest verbunden ist, wobei das leitfähige Metallelement (12) Teil eines Abzweigknotens (10) ist, der auf einer Seite eines Blechs (9) platziert ist, und der Metallanschluss (3) auf der gegenüberliegenden Seite des Blechs (9) platziert ist, wobei die Kappe (4) aus thermoplastischem Gummi besteht und umfasst:
- einen Hauptkörper (5), der eine zentrale Durchgangsbohrung (6) aufweist, durch die der Gewindestift (7) gesteckt werden kann, auf den die Mutter (8) geschraubt wird, wobei der Hauptkörper (5) mit dem Blech (9) in Kontakt kommen kann, wobei erste Mittel vorgesehen sind, um die Abdichtung gegen Flüssigkeiten zwischen dem Hauptkörper (5) und dem Blech (9) sicherzustellen;
- eine Kappe (13), die durch eine flexible Schnur (14) mit dem Hauptkörper (5) der Kappe (4) verbunden ist, wobei die Kappe (13) in einen kreisförmigen Sitz (15) passt, der sich am oberen Teil des Hauptkörpers (5) der Kappe (4) befindet, wobei zweite Mittel vorgesehen sind, um die Abdichtung gegen Flüssigkeiten zwischen dem Hauptkörper (5) und der Kappe (13) sicherzustellen;
- eine Hülse (4a), die das Ende des Kabels (2) bedeckt , wobei dritte Mittel vorgesehen sind, um die Flüssigkeitsdichtigkeit zwischen dem Hauptkörper (5) und dem elektrischen Kabel (2) sicherzustellen,
**dadurch gekennzeichnet, dass** die Öse auf das Ende des Elektrokabels (2) gecrimpt wird, nachdem die Ummantelung des Kabels selbst entfernt wurde, um einen metallischen Kontakt zu ermöglichen, wobei der metallische Anschluss (3) eine oder mehrere Ösen (3a, 3b) umfasst, die in dem thermoplastischen Gummi eingebettet sind, der die Kappe (4) bildet, wobei die Ösen (3a, 3b) die Funktion haben, die Druckspannung zu verteilen, die durch das Anziehen der Mutter (8) entsteht,
wobei die Ösen (3a) mit Schlitzen (3b) versehen sind, die dazu dienen, die Eingliederung des Ösentyp Metallanschlusses (3) in die Kappe (4) zu verbessern.

2. Gruppe mit Kappe (4) nach Anspruch 1, **dadurch gekennzeichnet, dass** die flexible Schnur (14) so gestaltet ist, dass sie gebogen werden kann, um das Einsetzen der Haube (13) auf den kreisförmigen Sitz (15) zu ermöglichen.

3. Gruppe mit Kappe (4) nach Anspruch 1 oder 2, **dadurch gekennzeichnet, dass** die ersten Mittel, die geeignet sind, die Flüssigkeitsdichtigkeit zwischen dem Hauptkörper (5) und dem Blech (9) sicherzustellen, einen Rand (5a) des Hauptkörpers (5) umfassen, der die folgenden Eigenschaften aufweist:
- eine Dicke (S) zwischen 5 % und 15 % des Durchmessers (D) des Hauptkörpers (5) der Kappe (4);
- eine Höhe (h) zwischen 10 % und 30 % des Durchmessers (D) des Grundkörpers (5) der Kappe (4);
- eine Neigung (β) der Innenfläche zwischen 7° und 13°;
so dass sich der Rand (5a) des Hauptkörpers (5) der Kappe (4) unter der Wirkung der Kompression, die durch das Anziehen der Mutter (8) auf den Gewindestift (7) ausgeübt wird, so verformt, dass er die Abdichtung bewirkt, indem er sich wie ein Saugnapf verhält.

4. Gruppe mit Kappe (4) nach Anspruch 3, **gekennzeichnet durch** eine Abrundung (5c) mit einem Krümmungsradius zwischen 0,5 mm und 1,5 mm an der Innenkante der Kante (5a), wobei die Abrundung ein einmaliges Gleiten zur Außenseite der Kante (5a) selbst begünstigt.

5. Gruppe mit Kappe (4) nach mindestens einem der Ansprüche 1 bis 4, **dadurch gekennzeichnet, dass** die zweiten Mittel, die geeignet sind, die Flüssigkeitsdichtigkeit zwischen dem Hauptkörper (5) und der Kappe (13) sicherzustellen, ein Profil umfassen, das sich im Inneren der Kappe (13) befindet und geeignet ist, mit einem Profil des Sitzes (15) verbunden zu werden, wobei die Profile durch das Vorhandensein von Formen gekennzeichnet sind, die einem oder mehreren O-Ringen (17) ähnlich sind, die mit entsprechenden Sitzen (18) mit einem Übermaß zwischen 0,1 mm und 0,3 mm verbunden werden.

6. Gruppe mit Kappe (4) nach mindestens einem der Ansprüche 1 bis 5, **dadurch gekennzeichnet, dass** die dritten Mittel, die geeignet sind, die Flüssigkeitsdichtigkeit zwischen dem Hauptkörper (5) und dem elektrischen Kabel (2) sicherzustellen, eine Überlappungslänge zwischen der Hülse (4a) und dem elektrischen Kabel (2) umfassen, die zwischen dem 2- und 3-fachen des Außendurchmessers des Kabels (2) liegt.

7. Gruppe mit Kappe (4) nach den Ansprüchen 1 bis 6, **dadurch gekennzeichnet, dass** der thermoplastische Gummi ein thermoplastisches Polyurethan-Elastomer TPU ist.

## Revendications

1. Ensemble composé d'un capuchon (4), d'un câble (2) et d'une cosse métallique (3) à œillet, le capuchon (4) est co-moulé sur la cosse métallique (3) et sur le câble (2), afin de protéger contre les infiltrations de liquide une connexion de câbles électriques (11) connectable à ladite cosse métallique (3), cette connexion est réalisée avec un élément métallique conducteur (12) par serrage d'un écrou (8) se vissant sur une tige filetée (7) solidaire de cet élément métallique conducteur (12), cet élément métallique conducteur (12) fait partie d'un nœud de dérivation (10) placé d'un côté d'une tôle (9) et la cosse métallique (3) est placée de l'autre côté de cette tôle (9), le capuchon (4) est en caoutchouc thermoplastique et comprend :
- un corps principal (5) qui comporte un trou traversant central (6), à travers lequel peut être insérée ladite tige filetée (7) sur laquelle est vissé ledit écrou (8), ledit corps principal (5) étant susceptible d'entrer en contact avec ladite tôle (9), des premiers moyens étant prévus pour assurer l'étanchéité aux liquides entre ledit corps principal (5) et ladite tôle (9);
- un petit capuchon (13), relié par un cordon souple (14) audit corps principal (5) du capuchon (4), ledit petit capuchon (13) pouvant s'emboîter dans un siège circulaire (15) obtenu sur la partie supérieure du corps principal (5) du capuchon (4), des seconds moyens étant prévus pour assurer l'étanchéité aux liquides entre ledit corps principal (5) et ledit petit capuchon (13);
- un manchon (4a) recouvrant l'extrémité dudit câble (2), des troisièmes moyens étant prévus pour assurer l'étanchéité entre ledit corps principal (5) et ledit câble électrique (2),
**caractérisée par le fait que** ledit œillet est serti sur l'extrémité du câble électrique (2) après avoir retiré le revêtement du câble lui-même, afin de permettre le contact métallique, ladite borne métallique (3) comprend une ou plusieurs oreilles (3a, 3b) noyées dans le caoutchouc thermoplastique qui constitue ledit capuchon (4), lesdites oreilles (3a, 3b) ayant pour fonction de répartir la contrainte de compression, due au serrage dudit écrou (8),
dans lequel lesdites oreilles (3a) sont pourvues de fentes (3b) conçues pour améliorer l'incorporation dudit œillet terminal (3) dans le capuchon (4).

2. Ensemble de capuchon (4) selon la revendication 1, **caractérisé en ce que** ledit cordon flexible (14) est conçu pour être plié de manière à permettre l'insertion du petit capuchon (13) sur le siège circulaire (15).

3. Ensemble de capuchon (4) selon la revendication 1 ou 2, **caractérisé en ce que** lesdits premiers moyens, aptes à assurer l'étanchéité entre ledit corps principal (5) et ladite tôle (9), comprennent un bord (5a) dudit corps principal (5) présentant les caractéristiques suivantes:
- une épaisseur (S) comprise entre 5% et 15% du diamètre (D) du corps principal (5) du capuchon (4);
- une hauteur (h) comprise entre 10% et 30% du diamètre (D) du corps principal (5) du capuchon (4);
- une inclinaison (β) de la surface interne comprise entre 7° et 13°;
de sorte que ledit bord (5a) du corps principal (5) du capuchon (4), sous l'effet de la compression exercée par le serrage dudit écrou (8) sur la tige filetée (7), se déforme de manière à réaliser l'étanchéité en se comportant comme une ventouse.

4. Ensemble de capuchon (4) selon la revendication 3, **caractérisé en ce qu'**il présente un arrondi (5c), de rayon de courbure compris entre 0,5 mm et 1,5 mm du bord interne dudit bord (5a), ledit arrondi favorisant un glissement unique vers l'extérieur du bord (5a) lui-même.

5. Ensemble de capuchon (4) selon au moins l'une des revendications 1 à 4, **caractérisé en ce que** lesdits seconds moyens, aptes à assurer l'étanchéité aux liquides entre ledit corps principal (5) et ledit petit capuchon (13), comprennent un profil, obtenu à l'intérieur du petit capuchon (13), apte à s'accoupler à un profil dudit siège (15), lesdits profils étant **caractérisés par** la présence de formes similaires à un ou plusieurs joints toriques (17) qui s'accouplent aux sièges correspondants (18) avec une interférence comprise entre 0,1 mm et 0,3 mm.

6. Ensemble de capuchon (4) selon au moins l'une des revendications 1 à 5, **caractérisé en ce que** lesdits troisièmes moyens, aptes à assurer l'étanchéité entre ledit corps principal (5) et ledit câble électrique (2), comprennent une longueur de chevauchement entre ledit manchon (4a) et ledit câble électrique (2) comprise entre 2 et 3 fois le diamètre extérieur du câble (2).

7. Ensemble de capuchon (4) selon les revendications 1 à 6, **caractérisé en ce que** ledit caoutchouc thermoplastique est un élastomère polyuréthane thermoplastique TPU.
